# EUROPEAN PATENT SPECIFICATION

(11) **EP 3 674 653 B1**
(45) Date of publication and mention of the grant of the patent: **20.10.2021**
(21) Application number: 18215970.7
(22) Date of filing: 31.12.2018
(51) Int. Cl.: G01B 3/06, G01B 3/56, B43L 7/10, E04F 21/24, E01C 19/44, G01C 9/26

(54) **TWO-PIECE BUILDER'S SCREEDING LEVEL**
ZWEITEILIGES RICHTSCHEIT
RÈGLE À NIVELER EN DEUX PARTIES

(43) Date of publication of application: 01.07.2020
(73) Proprietor: JPA Sp. z o.o., 03-287 Warszawa (PL)
(72) Inventor: SULIBORSKI, Pawel, 26-110 Skarzysko-Kamienna (PL); DONART, Jan, 26-110 Skarzysko-Kamienna (PL)
(74) Representative: Marcinska-Porzuc, Aleksandra

(56) References cited:
- FR-A1- 2 900 726
- GB-A- 2 265 018
- US-A- 687 432
- US-A- 805 467
- US-A- 4 317 289
- US-A- 4 920 658

## Description

The invention relates to an articulated two-piece builder's screeding level, with a functionality of a builder's square.

A screeding level and a square are basic work tools for civil engineers for finishing works. Both, known in the art, products must have appropriately large dimensions. The above requirements make using them quite troublesome and awkward.

Various solutions are known in the art aiming at carrying out measurements of a flat area or an angle.

Additionally, proposed solutions must satisfy building standards, i.e., must have a precision of 0.5 to 1 mm/m. Violating this value disqualifies a tool from using it in the construction industry.

One knows, from US Patent No. US4317289A, an adjustable level, in which two sections are joined in a common plane by rotational motion of an adjustable segment relative to the main section. One may obtain a configuration of both sections from a linear alignment to 90°.

Belgian invention No BE1011101A6 describes a level that is transformable into a square. The rotary system is equipped with a positioning ball that makes it possible to block a level both in a normal position as well as after rotating by 90°. Each of two terminals of the level is equipped with a snap that makes it possible to hang or to lean the level against any rim.

From US Patent No US6807743B2 one knows a combined level consisting of two sections that may create an angle of 45° or 135° therebetween. The sections of the level are joined via a connecting element that makes it possible to rotate these sections around the axis. The level also comprises a means for snap the mentioned sections such that the sections are oriented in one out of two configurations relative to each other.

A combinational level is known from US Patent No US7562463B2, that comprises two sections, one of these sections having a recess that is dimensioned and adjusted to detachable receiving the second section. Fasteners are arranged such that two sections may create a longitudinal rectangle, square, a T-shaped form, etc.

A builder's level with double articulation that can be formed into a square is known from FR 2900726 A1.

A work on a building site is carried out in different conditions, often in a dusty environment. Thus, for example, dust, of various sorts, deposits on the screeding level or the square, as well as pieces of mortar or plaster, which, even if entering dry into the tool, may dry and solidify after a contact with moisture. Sometimes it doesn't take much to clog the opening and locking mechanism of the tool due to dirt accumulated on the walls.

Additionally, in known tools, one can control the angle of a wall, but it is difficult to set the tool ideally at 180° or 90° and put it against the wall to check if it abuts closely to the wall.

Thus, the most difficult challenge is to provide an appropriate instrument that assures appropriate parameters of the measurement and reliability.

Thus, the object of the present invention is to provide a tool functioning both as a builder's screeding level as well as a builder's square, that may be folded, significantly improving comfort of using it, simultaneously assuring the appropriate measurement tolerance and a precise mechanism unsusceptible to dysregulation.

This aim has been reached by an articulated two-piece builder's screeding level having a functionality of a builder's square according to independent claims.

A builder's screeding level according to a first variant of the invention is defined in claim 1 and is a two-piece tool, joined in an articulated manner, having a functionality of a builder's square. The screeding level has two arms of a rectangular cross-section that are free to rotate, the axis of rotation of the arms being parallel to the shorter side of this rectangle. The right arm is built-in between parallel left and right plates and rotationally joined by a first connecting element. Also, the left arm is built-in between the plates, the left one and the right one, and is joined rotationally by a second connecting element, fixedly with a horizontal arm of a locking element placed within the left arm. The left plate has a first bottom opening and a first center opening, the first center opening laying in the same distance from the axis of the first connecting element and being rotated by an angle of 90° relative to the axis of the first connecting element, the openings cooperating with a first snap element of the right arm. The right plate a has second bottom opening and a second center opening, the second center opening laying in the same distance from the axis of the first connecting element and being rotated by an angle of 90° relative to the axis of the first connecting element, also cooperating with the first snap element of the right arm, whereas the upper opening of the vertical arm of the locking element cooperates with a second snap element placed in the left plate and/or a third snap element placed in the right plate, and also a third bottom opening in the horizontal arm of the locking element cooperates with a second snap element placed in the left plate and/or a third snap element placed in the right plate, the third bottom opening being located between cavities in the left arm.

Preferably, the vertical arm of the locking element has a profiled cavity cooperating with the first connecting element.

The right arm has, on its end on the side of the first connecting element, a longitudinal slot cooperating with the vertical arm of the locking element.

Preferably, the first connecting element is a pin with a tightening nut, and also the second connecting element is a pin with a tightening nut. The locking element may be a locking plate.

The upper opening of the vertical arm of the locking element and the third bottom opening of the horizontal arm of the locking element are, preferably, arranged relative to each other symmetrically centrally and are rotated relative to each other by an angle of 90°.

According to an embodiment, the first snap element, second snap element, and third snap element is a ball snap.

According to second variant of the invention a builder's screeding level as defined in claim 8 is provided which is an articulated two-piece tool, with a functionality of a builder's square, that has two arms of a rectangular cross-section, free to rotate, the axis of rotation of the arms being parallel to the shorter side of this rectangle. The right arm in the screeding level according to the invention is built-in between parallel left and right plates and rotationally joined by a first connecting element, and the left arm, also built-in between the plates, the left one and the right one, is joined rotationally by a second connecting element, fixedly with the horizontal arm of the locking element placed within the left arm. The left plate has a bottom retaining element and a center retaining element, laying in the same distance from the axis of the first connecting element and being rotated by an angle of 90° relative to the axis of the first connecting element, that cooperate with a through opening of the right arm, whereas the upper through opening of the vertical arm of the locking element cooperates with an upper retaining element placed in the left plate, and also a bottom through opening in the horizontal arm of the locking element cooperates with the upper retaining element placed in the left plate, the bottom through opening being located between cavities in the left arm.

Preferably, the vertical arm of the locking element has a profiled cavity cooperating with the first connecting element.

Additionally, the right arm has, on its end on the side of the first connecting element, a longitudinal slot cooperating with the vertical arm of the locking element.

According to an embodiment of the present variant of the invention, the first connecting element and the second connecting element is a pin, whereas locking element is a locking plate. The bottom retaining element, the center retaining element, and the upper retaining element is a retaining pin.

Preferably, the upper through opening and the bottom through opening of the locking element are arranged symmetrically centrally relative to each other and are rotated relative to each other by an angle of 90°.

According to the invention, mechanism of the builder's screeding level assumes to secure two of the screeding level arms in the left plate and in the right plate by means of a connecting element, for example a pivot or a pin with a ball snap. Each arm is mounted on a separate connecting element and has a separate axis of rotation. Additionally, in the first variant of the invention, a tightening nut is envisaged on every connecting element, of a limited mobility, that is intended do lock the screeding level in the position of 90° and/or 180°.

A locking plate is used in the left arm. The locking plate is permanently joined with the arm and its task is to set unequivocal position of the arm, of 90° and/or 180°. To set the position of 180° the lock should be released, i.e., for example the tightening nut should be loosed in the pin and the arm should be rotated to the desired position. A ball snap is located in the left plate, that blocks the motion of the arm after entering the appropriate opening of the left plate. After setting the position, the tightening nut blocks any undesired motion of the arm. Similarly, the position of 90° is obtained.

The right arm travels over the connecting element, for example, the right pin. Two side snap elements are located in the arm. To set the position of 180°, the lock should be released, for example by loosening tightening nut in the right pin, and the arm rotated to a desired position. The snap elements will block any further motion of the arm after entering the appropriate opening of the left and right plates. After setting the position tightening nut blocks undesired motion of the arm. Similarly, the position of 90° is obtained.

A similar mechanism is used in a builder's screeding level according to the second variant of the invention, wherein retaining elements, for example retaining pivots, are used instead of the snap element, for example a ball snap.

The articulated two-piece builder's screeding level, with a functionality of a builder's square, according to the invention, makes it possible to replace two separate hand tools with a single one, preserving desired parameters of these tools. By folding into half higher comfort of transport and storing is obtained. Higher convenience improves construction works and control procedures for reception of the construction works by supervision services.

This tool is mainly intended to control joints between walls, between a wall and a floor or a ceiling. The tool is a template, a square, basing on which the correctness of the work is checked, i.e., for example, if a wall abuts the tool ideally.

The present invention will be more fully understood and appreciated basing on the following detailed specification when read along with the attached drawing, in which:
- Fig. 1: shows a perspective view of a screeding level according to the invention,
- Fig. 2: shows a perspective view of a screeding level according to the invention in an unfolded state,
- Fig. 3: shows a perspective view of a screeding level according to the invention in a folded state,
- Fig. 4: shows a side view of a screeding level according to a first variant of the invention, in a longitudinal arrangement,
- Fig. 5: shows a side view of a screeding level according to a second variant of the invention, in a longitudinal arrangement.

Below, embodiments are presented of an articulated two-piece builder's screeding level, with a functionality of a builder's square, having two arms, of a rectangular cross-section, joined rotationally, the axis of mutual rotation of the arms being parallel to the shorter side of this rectangle. Mutual configuration of the left and right arms in the horizontal position or in angular position is realized by mechanisms that make it possible to rotate the end of the left arm relative to the end of the right arm to block a given position of the left arm relative to the right arm. However, it should be emphasized that the below described embodiments in no way are intended to limit the scope of protection of the invention, which is defined by the claims, and, in the contrary, they are only given to illustrate one of many possible applications of the present invention. The present invention may be applied everywhere, where one needs a tool having a function both of a builder's screeding level as well as a builder's square, that may be folded improving comfort of using it and assuring the appropriate measurement tolerance and a precise mechanism unsusceptible to putting out of order.

### Detailed description

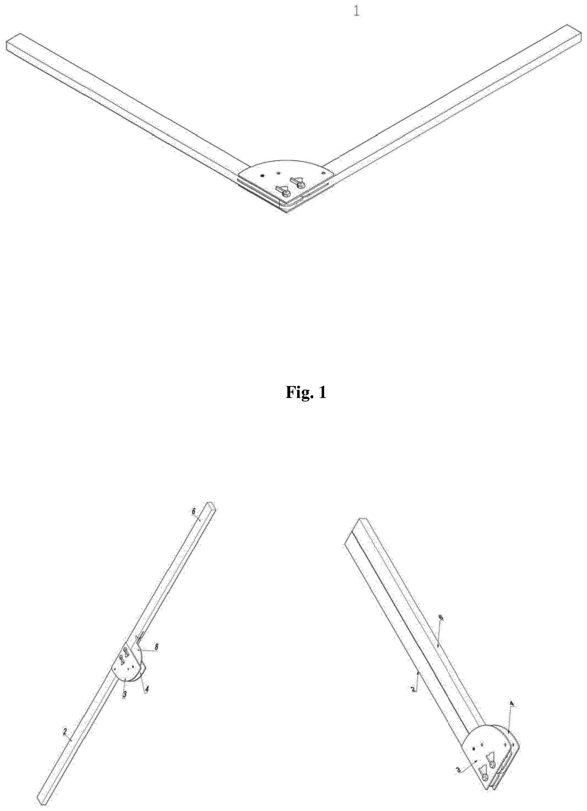

Fig. 1 shows an articulated two-piece builder's straightedge, with a functionality of a builder's square. The arms of the screeding level may be produced from any material, for example from aluminum, wood, etc. Sheets of the arms may be produced for example from steel, aluminum, titanium, polymers, ceramics, or glass fiber, as well as from a combination of these materials. Fig. 2 shows a screeding level according to the invention in an unfolded state, whereas Fig. 3 shows it in a folded state.

According to the invention, in order to prevent the accumulation of dirt onto the walls, that could lead to blocking the mechanism of opening or blocking the screeding level, it has been proposed that two arms of the screeding level are secured in the plates by means of a connecting element, for example a pivot or a pin, with a tightening nut. The tool is folded in the direction of its narrower side.

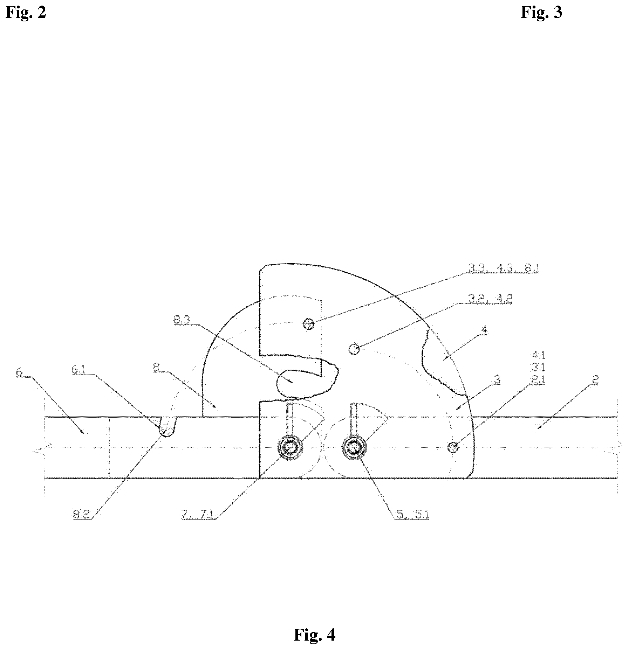

The articulated two-piece builder's screeding level, with a functionality of a builder's square, is shown in Fig. 4. The screeding level has two arms of a rectangular cross-section that are free to rotate. The axis of rotation of the arms is parallel to the shorter side of this rectangle. The right arm 2 is built-in between parallel left 3 and right 4 plates and rotationally joined by the right pin 5 with a tightening nut 5.1. Similarly, the left arm 6 is built-in between the left 3 and right 4 plates and rotationally joined by the left pin 7 with a tightening nut 7.1 and is joined fixedly with the horizontal arm of the blocking plate 8 placed within the left arm 6. The left plate 3 has a bottom opening 3.1 and a center opening 3.2 that is situated in the same distance from the axis of the right pin 5 and is rotated by an angle of 90° relative to the axis of the right pin 5, the openings cooperating with a ball snap 2.1 of the right arm 2, similarly as the bottom opening 4.1 and the center opening 4.2 of the right plate 4, that is situated in the same distance from the axis of the right pin 5 and rotated by an angle of 90° relative to the axis of the right pin 5. The upper opening 8.1 of the vertical arm of the blocking plate 8 cooperates with a ball snap 3.3 placed in the left plate 3 and/or a ball snap 4.3 placed in the right plate 4, similarly as the bottom opening 8.2 in the horizontal arm of the blocking plate 8 located between cavities 6.1 in the left arm 6. The vertical arm of the blocking plate 5 may have a profiled cavity 8.3 cooperating with the right pin 5.

The right arm 2 has, on its end on the side of the right pin 5, a longitudinal slot cooperating with the vertical arm of the blocking plate 8.

The horizontal orientation of the left arm 6 relative to the right arm 2 is obtained by appropriate rotation of the left arm 6 relative to the left 3 and right 4 plates around the axis of the left pin 7 and appropriate rotation of the right arm 2 relative to the left 3 and right 4 plates around the axis of the right pin 5 and is fixed by means of the ball snap 3.3 and/or 4.3 cooperating with the upper opening 8.1 of the blocking plate 8 for the left arm 6 and by means of the ball snap 2.1 cooperating with the bottom opening 3.1 of the left plate 3 and the bottom opening 4.1 of the right plate 4 for the right arm 2 and also by tightening the tightening nut 5.1 of the right pin 5 and the tightening nut 7.1 of the left pin 7.

Angular position 90° of the left arm 6 relative to the horizontal position of the right arm 2 is obtained by appropriate rotation of the left arm 6 relative to the left 3 and right 4 plates around the axis of the left pin 7 and is fixed by means of the ball snap 3.3 and/or 4.3 cooperating with the bottom opening 8.2 of the blocking plate 8 and also by tightening the tightening nut 5.1 of the right pin 5 and of tightening nut 7.1 of the left pin 7.

The angular position of the right arm 2 relative to the horizontal left arm 6 is obtained by appropriate rotation of the right arm 2 relative to the left 3 and right 4 plates around the axis of the right pin 5 and is fixed by means of the ball snap 2.1 cooperating with the center opening 3.2 of the left plate 3 and center opening 4.2 of the right plate 4 and also by tightening the tightening nut 5.1 of the right pin 5 and of tightening nut 7.1 of the left pin 7.

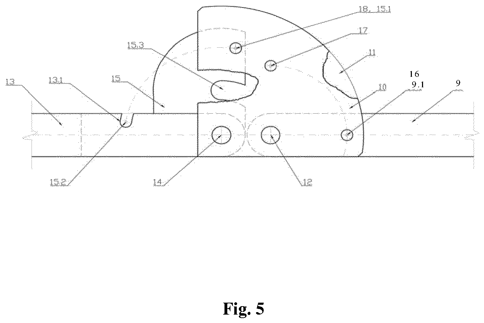

According to a second variant of the invention, as shown in Fig. 5, the builder's screeding level is a two-piece articulated tool with a functionality of a builder's square. The screeding level has two arms of a rectangular cross-section, free to rotate, the axis of rotation of the arms being parallel to the shorter side of this rectangle. The right arm 9 of the screeding level is built-in between parallel left 10 and right 11 plates and rotationally joined by the right pin 12. Also, the left arm 13 is built-in between the left 10 and right 11 plates, and is joined rotationally by the left pin 14 fixedly with the horizontal arm of the blocking plate 15 placed within the left arm 13. The left plate 10 has a bottom retaining pin 16 and a center retaining pin 17 laying in the same distance from the axis of the right pin 12 and rotated by an angle of 90° relative to the axis of the right pin 12, the pins cooperating with a through opening 9.1 of the right arm 9. The upper through opening 15.1 of the vertical arm of the blocking plate 15 cooperates with an upper retaining pivot 18 placed in the left plate 10. The bottom through opening 15.2 in the horizontal arm of the blocking plate 15 located between cavities 13.1 in the left arm 13 also cooperates with the upper retaining pivot 18 placed in the left plate 10.

The vertical arm of the blocking plate 15 may have a profiled cavity 15.3 cooperating with the right pin 12.

Preferably, the right arm 9 has, on its end on the side of the right pin 12, a longitudinal slot cooperating with the vertical arm of the blocking plate 15.

The horizontal orientation of the left arm 13 relative to the right arm 9 is obtained by appropriate rotation of the left arm 13 relative to the left 10 and right 11 plates around the axis of the left pin 14 and appropriate rotation of the right arm 9 relative to the left 10 and right 11 plates around the axis of the right pin 12, and is fixed by means of an upper retaining pivot 18 cooperating with an upper through opening 15.1 of the blocking plate 15 for the left arm 13 and by means of a bottom retaining pivot 16 cooperating with a bottom through opening 9.1 for the right arm 9.

The angular position 90° of the left arm 13 relative to the horizontal position of the right arm 9 is obtained by appropriate rotation of the left arm 13 relative to the left 10 and right 11 plates around the axis of the left pin 14 and is fixed by means of an upper retaining pivot 18 cooperating with a bottom through opening 15.2 of the blocking plate 15.

The angular position of the right arm 9 relative to the horizontal left arm 13 is obtained by appropriate rotation of the right arm 9 relative to the left 10 and right 11 plates around the axis of the right pin 12 and is fixed by means of the center retaining pin 17 cooperating with the through opening 9.1 of the right arm 9.

### List of references:

- **1**: builder's screeding level
- **2**: right arm
- **2.1**: snap element
- **3**: left plate
- **3.1**: first bottom opening
- **3.2**: first center opening
- **3.3**: second snap element
- **4**: right plate
- **4.1**: second bottom opening
- **4.2**: second center opening
- **4.3**: third snap element
- **5**: connecting element
- **6**: left arm
- **6.1**: cavities
- **7**: second connecting element
- **8**: locking element
- **8.1**: upper opening
- **8.2**: third bottom opening
- **8.3**: profiled cavity
- **9**: right arm
- **9.1**: through opening of the right arm
- **10**: left plate
- **11**: right plate
- **12**: connecting element
- **13**: left arm
- **13.1**: cavities
- **14**: connecting element
- **15**: locking element
- **15.1**: upper opening
- **15.2**: bottom opening
- **15.3**: profiled cavity
- **16**: bottom retaining element
- **17**: center retaining element
- **18**: upper retaining element

## Claims

1. An articulated two-piece builder's screeding level, with a functionality of a builder's square, having two arms of a rectangular cross-section, namely a left arm (6) and a right arm (2), that are free to rotate, the axes of rotation of the arms being parallel to the shorter side of this rectangle, **characterized in that** the right arm (2) is built-in between parallel left (3) and right (4) plates and rotationally joined thereto by a first connecting element (5), the left arm (6) also being built-in between the left (3) and right (4) plates and rotationally joined thereto by a second connecting element (7) and being joined fixedly with a horizontal arm of a locking element (8), said horizontal arm being placed within the left arm (6), wherein the left plate (3) has a first bottom opening (3.1) and a first center opening (3.2) laying in the same distance from the axis of the first connecting element (5) and being rotated relative to each other by an angle of 90° relative to the axis of the first connecting element (5), the openings being configured for cooperating with a first snap element (2.1) of the right arm (2), and wherein the right plate (4) has a second bottom opening (4.1) and a second center opening (4.2) laying in the same distance from the axis of the first connecting element (5) and being rotated relative to each other by an angle of 90° relative to the axis of the first connecting element (5), and also being configured for cooperating with the first snap element (2.1) of the right arm (2), whereas an upper opening (8.1) of a vertical arm of the locking element (8) is configured to cooperate with a second snap element (3.3) placed in the left plate (3) and/or a third snap element (4.3) placed in the right plate (4), and also a third bottom opening (8.2) in the horizontal arm of the locking element (8) is configured to cooperate with the second snap element (3.3) placed in the left plate (3) and/or the third snap element (4.3) placed in the right plate (4), the third bottom opening (8.2) being located between cavities (6.1) in the left arm (6).

2. The screeding level according to claim 1 **characterized in that** the vertical arm of the locking element (8) has a profiled cavity (8.3) cooperating with the first connecting element (5).

3. The screeding level according to claim 1 **characterized in that** the right arm (2) has, on its end on the side of the first connecting element (5), a longitudinal slot cooperating with the vertical arm of the locking element (8).

4. The screeding level according to any one of the preceding claims **characterized in that** the first connecting element (5) is a pin with a tightening nut (5.1), and the second connecting element (7) is a pin with a tightening nut (7.1).

5. The screeding level according to any one of the preceding claims **characterized in that** locking element (8) is a locking plate.

6. The screeding level according to claim 1 **characterized in that** the upper opening (8.1) of the vertical arm of the locking element (8) and the third bottom opening (8.2) of the horizontal arm of the locking element (8) are arranged symmetrically centrally relative to each other and are rotated relative to each other by an angle of 90°.

7. The screeding level according to claim 1 **characterized in that** each of the first snap element (2.1), the second snap element (3.3), and the third snap element (4.3) is a ball snap.

8. An articulated two-piece builder's screeding level, with a functionality of a builder's square, having two arms of a rectangular cross-section, namely a left arm (13) and a right arm (9), that are free to rotate, the axes of rotation of the arms being parallel to the shorter side of this rectangle, **characterized in that** the right arm (9) is built-in between parallel left (10) and right (11) plates and rotationally joined thereto by a first connecting element (12), the left arm (13) also being built-in between the left (10) and right (11) plates and rotationally joined thereto by a second connecting element (14), and being joined fixedly with a horizontal arm of a locking element (15) placed within the left arm (13), the left plate (10) having a bottom retaining element (16) and a center retaining element (17) laying in the same distance from the axis of the first connecting element (12) and rotated relative to each other by an angle of 90° relative to the axis of the first connecting element (12), the retaining elements being configured for cooperating with a through opening (9.1) of the right arm (9), whereas an upper through opening (15.1) of a vertical arm of the locking element (15) is configured to cooperate with an upper retaining element (18) placed in the left plate (10), and also a bottom through opening (15.2) in the horizontal arm of the locking element (15) is configured to cooperate with the upper retaining element (18) placed in the left plate (10), the bottom through opening (15.2) being located between cavities (13.1) in the left arm (13).

9. The screeding level according to claim 8 **characterized in that** the vertical arm of the locking element (15) has a profiled cavity (15.3) cooperating with the first connecting element (12).

10. The screeding level according to claim 8 **characterized in that** the right arm (9) has, on its end on the side of the first connecting element (12), a longitudinal slot cooperating with the vertical arm of the locking element (15).

11. The screeding level according to any one of the preceding claims **characterized in that** the first connecting element (12) and the second connecting element (14) is a pin.

12. The screeding level according to according to any one of the preceding claims **characterized in that** the locking element (15) is a locking plate.

13. The screeding level according to claim 8 **characterized in that** the upper through opening (15.1) and the bottom through opening (15.2) of the locking element (15) are arranged symmetrically centrally relative to each other and are rotated relative to each other by an angle of 90°.

14. The screeding level according to claim 8 **characterized in that** each of the bottom retaining element (16), the center retaining element (17), and the upper retaining element (18) is a retaining pin.

## Patentansprüche

1. Gelenkige zweistückige Estrichwaage mit einer Funktionalität einer Richtlatte, aufweisend zwei Arme mit einem rechteckigen Querschnitt, nämlich einen linken Arm (6) und einen rechten Arm (2), die frei zum Drehen sind, wobei die Drehachsen der Arme parallel zur kürzeren Seite des Rechtecks sind, **dadurch gekennzeichnet, dass** der rechte Arm (2) zwischen parallelen linken (3) und rechten (4) Platten eingebaut und durch ein erstes Verbindungselement (5) drehbar damit verbunden ist, der linke Arm (6) ebenfalls zwischen den linken (3) und rechten (4) Platten eingebaut und durch ein zweites Verbindungselement (7) drehbar damit verbunden ist und starr mit einem horizontalen Arm eines Sperrelements (8) verbunden ist, wobei der horizontale Arm innerhalb des linken Arms (6) angeordnet ist, wobei die linke Platte (3) eine erste Bodenöffnung (3.1) und eine erste Mittenöffnung (3.2) aufweist, die im selben Abstand zur Achse des ersten Verbindungselements (5) liegen und in Bezug zueinander um einen Winkel von 90° bezüglich der Achse des ersten Verbindungselements (5) gedreht sind, wobei die Öffnungen zum Zusammenwirken mit einem ersten Schnappelement (2.1) des rechten Arms (2) konfiguriert sind, und wobei die rechte Platte (4) eine zweite Bodenöffnung (4.1) und eine zweite Mittenöffnung (4.2) aufweist, die im selben Abstand zur Achse des ersten Verbindungselements (5) liegen und in Bezug zueinander um einen Winkel von 90° bezüglich der Achse des ersten Verbindungselements (5) gedreht sind und ebenfalls zum Zusammenwirken mit dem ersten Schnappelement (2.1) des rechten Arms (2) konfiguriert sind, während eine obere Öffnung (8.1) eines vertikalen Arms des Sperrelements (8) zum Zusammenwirken mit einem zweiten Schnappelement (3.3), das in der linken Platte (3) angeordnet ist, und/oder einem dritten Schnappelement (4.3), das in der rechten Platte (4) angeordnet ist, konfiguriert ist und außerdem eine dritte Bodenöffnung (8.2) im horizontalen Arm des Sperrelements (8) zum Zusammenwirken mit dem zweiten Schnappelement (3.3), das in der linken Platte (3) angeordnet ist, und/oder dem dritten Schnappelement (4.3), das in der rechten Platte (4) angeordnet ist, konfiguriert ist, wobei sich die dritte Bodenöffnung (8.2) zwischen Hohlräumen (6.1) im linken Arm (6) befindet.

2. Estrichwaage nach Anspruch 1, **dadurch gekennzeichnet, dass** der vertikale Arm des Sperrelements (8) einen profilierten Hohlraum (8.3) aufweist, der mit dem ersten Verbindungselement (5) zusammenwirkt.

3. Estrichwaage nach Anspruch 1, **dadurch gekennzeichnet, dass** der rechte Arm (2), an seinem Ende auf der Seite des ersten Verbindungselements (5), einen Längsschlitz aufweist, der mit dem vertikalen Arm des Sperrelements (8) zusammenwirkt.

4. Estrichwaage nach einem der vorhergehenden Ansprüche, **dadurch gekennzeichnet, dass** das erste Verbindungselement (5) ein Stift mit einer Spannmutter (5.1) ist und das zweite Verbindungselement (7) ein Stift mit einer Spannmutter (7.1) ist.

5. Estrichwaage nach einem der vorhergehenden Ansprüche, **dadurch gekennzeichnet, dass** das Sperrelement (8) eine Sperrplatte ist.

6. Estrichwaage nach Anspruch 1, **dadurch gekennzeichnet, dass** die obere Öffnung (8.1) des vertikalen Arms des Sperrelements (8) und die dritte Bodenöffnung (8.2) des horizontalen Arms des Sperrelements (8) symmetrisch zentral in Bezug zueinander angeordnet sind und in Bezug zueinander um einen Winkel von 90° gedreht sind.

7. Estrichwaage nach Anspruch 1, **dadurch gekennzeichnet, dass** jedes des ersten Schnappelements (2.1), des zweiten Schnappelements (3.3) und des dritten Schnappelements (4.3) ein Kugelschnappelement ist.

8. Gelenkige zweistückige Estrichwaage mit einer Funktionalität einer Richtlatte, aufweisend zwei Arme mit einem rechteckigen Querschnitt, nämlich einen linken Arm (13) und einen rechten Arm (9), die frei zum Drehen sind, wobei die Drehachsen der Arme parallel zur kürzeren Seite des Rechtecks sind, **dadurch gekennzeichnet, dass** der rechte Arm (9) zwischen parallelen linken (10) und rechten (11) Platten eingebaut und durch ein erstes Verbindungselement (12) drehbar damit verbunden ist, der linke Arm (13) ebenfalls zwischen den linken (10) und rechten (11) Platten eingebaut und durch ein zweites Verbindungselement (14) drehbar damit verbunden ist und starr mit einem horizontalen Arm eines Sperrelements (15) verbunden ist, der innerhalb des linken Arms (13) angeordnet ist, wobei die linke Platte (10) ein unteres Halteelement (16) und ein zentrales Halteelement (17) aufweist, die im selben Abstand zur Achse des ersten Verbindungselements (12) liegen und in Bezug zueinander um einen Winkel von 90° bezüglich der Achse des ersten Verbindungselements (12) gedreht sind, wobei die Halteelemente zum Zusammenwirken mit einer Durchgangsöffnung (9.1) des rechten Arms (9) konfiguriert sind, während eine obere Durchgangsöffnung (15.1) eines vertikalen Arms des Sperrelements (15) zum Zusammenwirken mit einem oberen Halteelement (18), das in der linken Platte (10) angeordnet ist, konfiguriert ist und außerdem eine untere Durchgangsöffnung (15.2) im horizontalen Arm des Sperrelements (15) zum Zusammenwirken mit dem oberen Halteelement (18), das in der linken Platte (10) angeordnet ist, konfiguriert ist, wobei sich die untere Durchgangsöffnung (15.2) zwischen Hohlräumen (13.1) im linken Arm (13) befindet.

9. Estrichwaage nach Anspruch 8, **dadurch gekennzeichnet, dass** der vertikale Arm des Sperrelements (15) einen profilierten Hohlraum (15.3) aufweist, der mit dem ersten Verbindungselement (12) zusammenwirkt.

10. Estrichwaage nach Anspruch 8, **dadurch gekennzeichnet, dass** der rechte Arm (9), an seinem Ende auf der Seite des ersten Verbindungselements (12), einen Längsschlitz aufweist, der mit dem vertikalen Arm des Sperrelements (15) zusammenwirkt.

11. Estrichwaage nach einem der vorhergehenden Ansprüche, **dadurch gekennzeichnet, dass** das erste Verbindungselement (12) und das zweite Verbindungselement (14) ein Stift ist.

12. Estrichwaage nach einem der vorhergehenden Ansprüche, **dadurch gekennzeichnet, dass** das Sperrelement (15) eine Sperrplatte ist.

13. Estrichwaage nach Anspruch 8, **dadurch gekennzeichnet, dass** die obere Durchgangsöffnung (15.1) und die untere Durchgangsöffnung (15.2) des Sperrelements (15) symmetrisch zentral in Bezug zueinander angeordnet sind und in Bezug zueinander um einen Winkel von 90° gedreht sind.

14. Estrichwaage nach Anspruch 8, **dadurch gekennzeichnet, dass** jedes des unteren Halteelements (16) des zentralen Halteelements (17) und des oberen Halteelements (18) ein Haltestift ist.

## Revendications

1. Niveau d'aplanissement de constructeur articulé à deux pièces, doté d'une fonctionnalité de carré de constructeur, ayant deux bras à section transversale rectangulaire, à savoir un bras gauche (6) et un bras droit (2) qui sont libres de tourner, les axes de rotation des bras étant parallèles au côté court de ce rectangle,
**caractérisé en ce que** le bras droit (2) est intégré entre des plaques parallèles gauche (3) et droite (4) et assemblé de manière à pouvoir tourner à celles-ci par un premier élément de connexion (5), le bras gauche (6) étant aussi intégré entre les plaques gauche (3) et droite (4) et assemblé de manière à pouvoir tourner à celles-ci par un second élément de connexion (7) et étant assemblé fixement à un bras horizontal d'un élément de verrouillage (8), ledit bras horizontal étant placé dans le bras gauche (6), la plaque gauche (3) ayant une première ouverture de fond (3.1) et une première ouverture de centre (3.2) situées à la même distance de l'axe du premier élément de connexion (5) et étant tournées l'une par rapport à l'autre à raison d'un angle de 90° par rapport à l'axe du premier élément de connexion (5), les ouvertures étant conçues pour coopérer avec un premier élément d'accrochage (2.1) du bras droit (2), et la plaque droite (4) ayant une deuxième ouverture de fond (4.1) et une deuxième ouverture de centre (4.2) situées à la même distance de l'axe du premier élément de connexion (5) et étant tournées l'une par rapport à l'autre à raison d'un angle de 90° par rapport à l'axe du premier élément de connexion (5), et étant aussi conçues pour coopérer avec le premier élément d'accrochage (2.1) du bras droit (2), tandis qu'une ouverture supérieure (8.1) d'un bras vertical de l'élément de verrouillage (8) est conçue pour coopérer avec un deuxième élément d'accrochage (3.3) placé dans la plaque gauche (3) et/ou un troisième élément d'accrochage (4.3) placé dans la plaque droite (4), et une troisième ouverture de fond (8.2) dans le bras horizontal de l'élément de verrouillage (8) est aussi conçue pour coopérer avec le deuxième élément d'accrochage (3.3) placé dans la plaque gauche (3) et/ou le troisième élément d'accrochage (4.3) placé dans la plaque droite (4), la troisième ouverture de fond (8.2) étant située entre des cavités (6.1) dans le bras gauche (6).

2. Niveau d'aplanissement selon la revendication 1, **caractérisé en ce que** le bras vertical de l'élément de verrouillage (8) comporte une cavité profilée (8.3) coopérant avec le premier élément de connexion (5).

3. Niveau d'aplanissement selon la revendication 1, **caractérisé en ce que** le bras droit (2) comporte, sur son extrémité située sur le côté du premier élément de connexion (5), une fente longitudinale coopérant avec le bras vertical de l'élément de verrouillage (8).

4. Niveau d'aplanissement selon l'une quelconque des revendications précédentes, **caractérisé en ce que** le premier élément de connexion (5) est une broche dotée d'un écrou de serrage (5.1) et le second élément de connexion (7) est une broche dotée d'un écrou de serrage (7.1).

5. Niveau d'aplanissement selon l'une quelconque des revendications précédentes, **caractérisé en ce que** l'élément de verrouillage (8) est une plaque de verrouillage.

6. Niveau d'aplanissement selon la revendication 1, **caractérisé en ce que** l'ouverture supérieure (8.1) du bras vertical de l'élément de verrouillage (8) et la troisième ouverture de fond (8.2) du bras horizontal de l'élément de verrouillage (8) sont disposées symétriquement au centre l'une par rapport à l'autre et tournées l'une par rapport à l'autre à raison d'un angle de 90°.

7. Niveau d'aplanissement selon la revendication 1, **caractérisé en ce que** chacun parmi le premier élément d'accrochage (2.1), le deuxième élément d'accrochage (3.3) et le troisième élément d'accrochage (4.3) est un raccord à bille.

8. Niveau d'aplanissement de constructeur articulé à deux pièces, doté d'une fonctionnalité de carré de constructeur, ayant deux bras à section transversale rectangulaire, à savoir un bras gauche (13) et un bras droit (9) qui sont libres de tourner, les axes de rotation des bras étant parallèles au côté court de ce rectangle,
**caractérisé en ce que** le bras droit (9) est intégré entre des plaques parallèles gauche (10) et droite (11) et assemblé de manière à pouvoir tourner à celles-ci par un premier élément de connexion (12), le bras gauche (13) étant aussi intégré entre les plaques gauche (10) et droite (11) et assemblé de manière à pouvoir tourner à celles-ci par un second élément de connexion (14) et étant assemblé fixement à un bras horizontal d'un élément de verrouillage (15) placé dans le bras gauche (13), la plaque gauche (10) ayant un élément de retenue de fond (16) et un élément de retenue de centre (17) situés à la même distance de l'axe du premier élément de connexion (12) et étant tournés l'un par rapport à l'autre à raison d'un angle de 90° par rapport à l'axe du premier élément de connexion (12), les éléments de retenue étant conçus pour coopérer avec une ouverture traversante (9.1) du bras droit (9), tandis qu'une ouverture traversante supérieure (15.1) d'un bras vertical de l'élément de verrouillage (15) est conçue pour coopérer avec un élément de retenue supérieur (18) placé dans la plaque gauche (10), et qu'une ouverture traversante de fond (15.2) dans le bras horizontal de l'élément de verrouillage (15) est aussi conçue pour coopérer avec l'élément de retenue supérieur (18) placé dans la plaque gauche (10), l'ouverture traversante de fond (15.2) étant située entre des cavités (13.1) dans le bras gauche (13).

9. Niveau d'aplanissement selon la revendication 8, **caractérisé en ce que** le bras vertical de l'élément verrouillage (15) comporte une cavité profilée (15.3) coopérant avec le premier élément de connexion (12).

10. Niveau d'aplanissement selon la revendication 8, **caractérisé en ce que** le bras droit (9) comporte, sur son extrémité située sur le côté du premier élément de connexion (12), une fente longitudinale coopérant avec le bras vertical de l'élément de verrouillage (15).

11. Niveau d'aplanissement selon l'une quelconque des revendications précédentes, **caractérisé en ce que** le premier élément de connexion (12) et le second élément de connexion (14) sont une broche.

12. Niveau d'aplanissement selon l'une quelconque des revendications précédentes, **caractérisé en ce que** l'élément verrouillage (15) est une plaque de verrouillage.

13. Niveau d'aplanissement selon la revendication 8, **caractérisé en ce que** l'ouverture traversante (15.1) et l'ouverture traversante de fond (15.2) de l'élément verrouillage (15) sont disposées symétriquement au centre l'une par rapport à l'autre et tournent l'une par rapport à l'autre à raison d'un angle de 90°.

14. Niveau d'aplanissement selon la revendication 8, **caractérisé en ce que** chacun parmi l'élément de retenue de fond (16), l'élément de retenue de centre (17), et l'élément de retenue supérieur (18) est une broche de retenue.
